# EUROPEAN PATENT SPECIFICATION

(11) **EP 2 494 797 B1**
(45) Date of publication and mention of the grant of the patent: **03.06.2020**
(21) Application number: 09748755.7
(22) Date of filing: 29.10.2009
(51) Int. Cl.: H04W 4/08, H04W 4/18, H04W 8/18

(54) **APPARATUS AND METHOD WITH SERVER INCLUDING DATA REPLICATED FROM THE MOBILE DEVICE**
VORRICHTUNG UND VERFAHREN MIT EINEM SERVER MIT AUS DER MOBILEN VORRICHTUNG REPLIZIERTEN DATEN
APPAREIL ET PROCÉDÉ AVEC SERVEUR COMPRENANT DES DONNÉES DUPLIQUÉES À PARTIR DU DISPOSITIF MOBILE

(43) Date of publication of application: 05.09.2012
(73) Proprietor: Nokia Solutions and Networks Oy, 02610 Espoo (FI)
(72) Inventor: VAN PHAN, Vinh, 90100 Oulu (FI); KIISKI, Matti Tapani, 90460 Oulunsalo (FI); VESTERINEN, Seppo Ilmari, 90460 Oulunsalo (FI)
(74) Representative: Browne, Robin Forsythe
(86) International application number: PCT/EP2009/064306
(87) International publication number: WO 2011/050848

(56) References cited:
- US-A1- 2003 103 496
- US-A1- 2003 194 998
- US-A1- 2005 085 225

## Description

### Field

The exemplary and non-limiting embodiments of the invention relate generally to wireless communication networks and, more particularly, to an apparatus and a method in communication networks.

### Background

The following description of background art may include insights, discoveries, understandings or disclosures, or associations together with disclosures not known to the relevant art prior to the present invention but provided by the invention. Some of such contributions of the invention may be specifically pointed out below, whereas other such contributions of the invention will be apparent from their context.

Wireless communication systems are constantly under development. The developing systems provide a cost-effective support of high data rates and efficient resource utilization. One communication system under development is the 3rd Generation Partnership Project (3GPP) Long Term Evolution (LTE) Release 8. An improved version of the Long Term Evolution radio access system is called LTE-Advanced (LTE-A). Several new services are under development. Different data and multimedia services are attractive to users, and communication systems should provide a sufficient quality of service and required throughput.

Examples of growing services are social networking services. In those services, users share information between each other. The information may be in the form of multimedia messages or shared data, such as video clips, music tracks, documents, etc. The patent publication US 2003/194998 discloses an apparatus that stores data from the user equipment and replicates it.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus configured to: store a mobile context of user equipment, the mobile context comprising information on the Home NodeB's of which closed subscriber groups the user equipment belongs to.

In an embodiment, the apparatus is further configured to update the mobile context of user equipment.

In an embodiment, the apparatus is further configured to store a mobile context of user equipment, the mobile context comprising information of a Home NodeB configured to act as a replica server of the user equipment by storing shared data stored in the user equipment.

According to an aspect of the present invention, there is provided an apparatus comprising: a transceiver configured to be in wireless connection with one or more sets of user equipment; a memory configured to store information on user equipment allowed to be in wireless connection with the apparatus and on user equipment currently connected to the apparatus; a controller configured to connect to the Internet, provide the user equipment a connection to the Internet and a cellular network, and control the transceiver to receive from user equipment shared data and replicate the shared data by storing the data into the memory.

In an embodiment, the apparatus is configured to receive a request from a network to access for the shared data of the user equipment; and response to the request by transmitting the requested data to the network.

According to an aspect of the present invention, there is provided an apparatus configured to: have the capability of being in wireless connection with network elements; belong to a closed subscriber group of at least one network element; store a mobile context of the apparatus, the mobile context comprising information on the network elements of which closed subscriber groups the user equipment belongs to. According to another aspect of the present invention, there is provided a chipset comprising an apparatus described above.

According to another aspect of the present invention, there is provided a method comprising: storing a mobile context of user equipment, the mobile context comprising information on the Home NodeB's of which closed subscriber groups the user equipment belongs to.

In an embodiment, the method further comprises updating the mobile context of user equipment.

According to another aspect of the present invention, there is provided a method comprising: storing information on user equipment with which a wireless connection is allowed and on user equipment currently connected; providing the user equipment a possibility to connect to the Internet and a cellular network, receiving from the user equipment shared data and replicate the data by storing the data into a memory. According to another aspect of the present invention, there is provided a method comprising: belonging to a close subscriber group of at least one network element; storing a mobile context of the apparatus, the mobile context comprising information on the Home NodeB's of which closed subscriber groups the user equipment belongs to.

According to another aspect of the present invention, there is provided a computer program comprising program code means adapted to perform any of steps of the methods described above when the program is run on a computer.

According to another aspect of the present invention, there is provided an article of manufacture comprising a computer readable medium and embodying program instructions thereon executable by a computer operably coupled to a memory which, when executed by the computer, perform any of steps of the methods described above.

Although the various aspects, embodiments and features of the invention are recited independently, it should be appreciated that all combinations of the various aspects, embodiments and features of the invention are possible and within the scope of the present invention as claimed.

### List of drawings

Embodiments of the present invention are described below, by way of example only, with reference to the accompanying drawings, in which
Figure 1 shows a simplified block diagram illustrating exemplary system architecture;
Figures 2A and 2B illustrate embodiments of the invention with simplified examples of a network;
Figures 3A to 3C illustrate examples of apparatuses where embodiments of the invention may be applied;
Figures 4A to 4F are signaling charts illustrating embodiments of the invention; and
Figure 5 is a flowchart illustrating an embodiment of the invention.

### Description of some embodiments

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments are applicable to any base station, user equipment, server, corresponding component, and/or to any communication system or network or any combination of different communication systems that support required functionalities.

The communication system or network may be a wireless communication system or a communication system utilizing both fixed networks and wireless networks. The protocols used and the specifications of communication systems, servers and user terminals, especially in wireless communication, develop rapidly. Such development may require extra changes to an embodiment. Therefore, all words and expressions should be interpreted broadly and are intended to illustrate, not to restrict, the embodiment.

Modern communications systems under development provide a possibility to install local area (LA) base stations in the network. These base stations may be installed within buildings to provide additional coverage and capacity in homes and offices. These base stations may utilize so-called "plug- and-play" operation with a self-organizing network (SON) and flexible spectrum use (FSU) techniques.

Main targets of these techniques are to minimize the need for network configuration and enable new types of communications networks, such as decentralized ad hoc networks. The techniques enable self-tuning and reconfiguration of network parameters of the LA base stations. In addition, the techniques provide some solutions for utilizing and sharing spectrum resources among communication systems of the same or different operators serving in an overlapping or even common spectrum and/or geographical area.

In the following, different embodiments will be described using, as an example of a system architecture whereto the embodiments may be applied, an architecture based on Evolved UMTS Terrestrial Radio Access (E-UTRA, UMTS = Universal Mobile Telecommunications System) without restricting the embodiment to such an architecture, however.

Many different radio protocols to be used in communications systems exist. Some examples of different communication systems are the universal mobile telecommunications system (UMTS) radio access network (UTRAN or E-UTRAN), long term evolution (LTE, also known as E-UTRA), long term evolution advanced (LTE-A), Wireless Local Area Network (WLAN), worldwide interoperability for microwave access (WiMAX), Bluetooth®, personal communications services (PCS) and systems using ultra-wideband (UWB) technology.

In an E-UTRA network the base stations may be called Enhanced Node Bs (eNB). These base stations may be called Wide Area (WA) base stations.

In the E-UTRA network the local area (LA) base stations may be called Home Node Bs (HNB) or Local Node Bs (LNB). A Home Node B may be a wireless access point that may be purchased and/or installed by a private user, for example in the user's home.

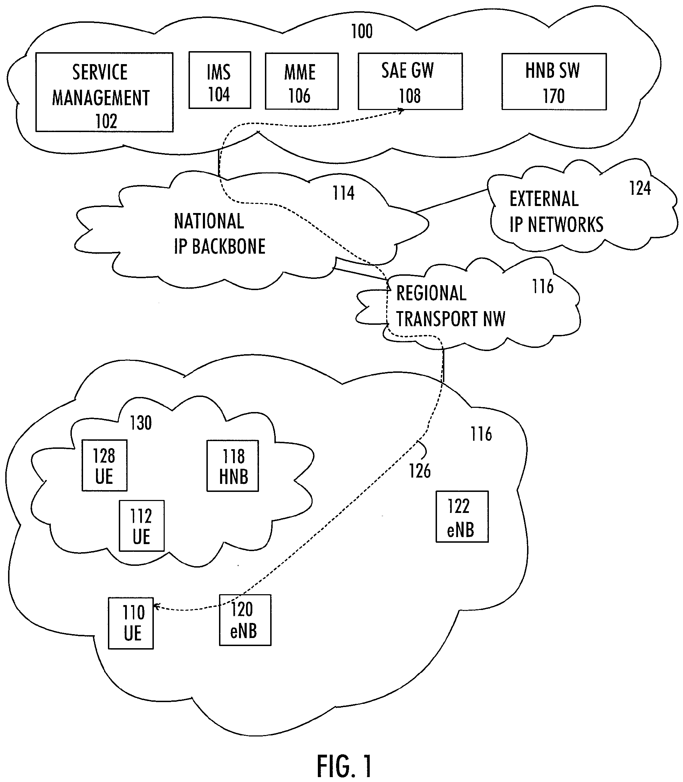

Figure 1 illustrates a simplified view of a system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for communication are irrelevant to the actual invention. Therefore, they need not to be discussed in more detail here.

In the example of Figure 1, the radio system is based on LTE/SAE (Long Term Evolution/System Architecture Evolution) network elements. However, the invention described in these examples is not limited to the LTE/SAE radio systems but can also be implemented in other radio systems, such as HSDPA (high speed downlink packet access), HSUPA (high speed uplink packet access), or in other suitable radio systems.

The exemplary radio system of Figure 1 comprises a service core 100 of an operator including the following elements: a service management 102, IMS (IP multimedia subsystem) 104, a MME (Mobility Management Entity) 106, and a SAE GW (SAE Gateway) 108.

Traffic between mobile terminals 110, 112, 128 and the service core network 100 is carried out via a national IP backbone network 114, a regional transport network 116, and a local area aggregation network 116. eNBs (Enhanced node Bs) 118 to 122 of the radio system host the functions for Radio Resource Management: Radio Bearer Control, Radio Admission Control, Connection Mobility Control, Dynamic Resource Allocation (scheduling). The MME 106 is responsible for distributing paging messages to the eNBs 118 to 122. The MME also generates and allocates temporary identities to user equipment connected to the network.

The example of Figure 1 comprises a local area base station HNB 118 forming a cell 130. The HNB may be privately purchased and owned. The owner of the HNB 118 may form a user group of the UEs which are allowed to access the HNB. Such a group may be called a closed subscriber group CSG. Typically, only the members of the CSG of a HNB are allowed to contact the HNB. In an embodiment, more than one HNB form a CSG Network. For example, one home may be covered by more than one HNB sharing the same CSG.

Current radio networks are based on a single switch model. This is implemented in the LTE/SAE network by the SAE GW (SAE Gateway) 108. All calls are "long distance" because the user traffic is forced to pass via the SAE GW 108. For example, a connection from a mobile terminal 110 (connected to the eNodeB 120) to an external IP network 124, such as to the Internet 124, is typically guided via a route indicated with a dashed line 126. Likewise, a speech call from the mobile terminal 110 to another mobile terminal of the system is routed through the SAE GW 108. In an embodiment, the HNBs of the system may be connected to a separate gateway, a HNB Gateway 170.

In an embodiment, the server functionality is implemented in the eNodeB. For example, a HNB may be implemented to connect to the Internet through a high-speed DSL Internet connection available in the location of the HNB. Thus, the user equipment 112 may connect to the Internet through the HNB 118 which acts as a gateway to the Internet.

It should be appreciated that the communication system may also comprise other core network elements besides SAE GW 108 and MME 106. Direct communication between different eNodeBs over an air interface is also possible by implementing a relay node concept, wherein a relay node may be considered as a special eNodeB having wireless backhauls or, for instance, X2 and S1 interfaces relayed over the air interface by another eNodeB. The communication system is also able to communicate with other networks, such as a public switched telephone network.

The embodiments are not, however, restricted to the network given above as an example, but a person skilled in the art may apply the solution to other communication networks provided with the necessary properties. For example, the connections between different network elements may be realized with Internet Protocol (IP) connections.

In an embodiment, when user equipment (UE) are turned on and connected to a network, the network creates a mobile context for the UE. The mobile context of a UE may comprise a temporary identification of the UE, properties and communication capabilities of the UE and subscriber information. The mobile context may also comprise information changing in time. For example, if the UE has an active connection, the mobile context may comprise information on the radio bearers allocated to the connection. In an embodiment, at least part of data for the mobile context of a UE may be stored in a Home Subscriber Server (HSS) of the network UE belongs to. The HSS may be considered a part of the Service Management 102 of Figure 1.

In an embodiment, the MME creates the mobile context. When creating a mobile context for a UE, the MME may query the HSS for necessary information. The MME may transmit the mobile context of a UE to the eNodeB the UE is connected to. If the dynamic information stored in the mobile context changes, the MME is configured to update the context. If a UE performs a handover from an eNodeB to another, the mobile context of the UE is transferred to the new eNodeB.

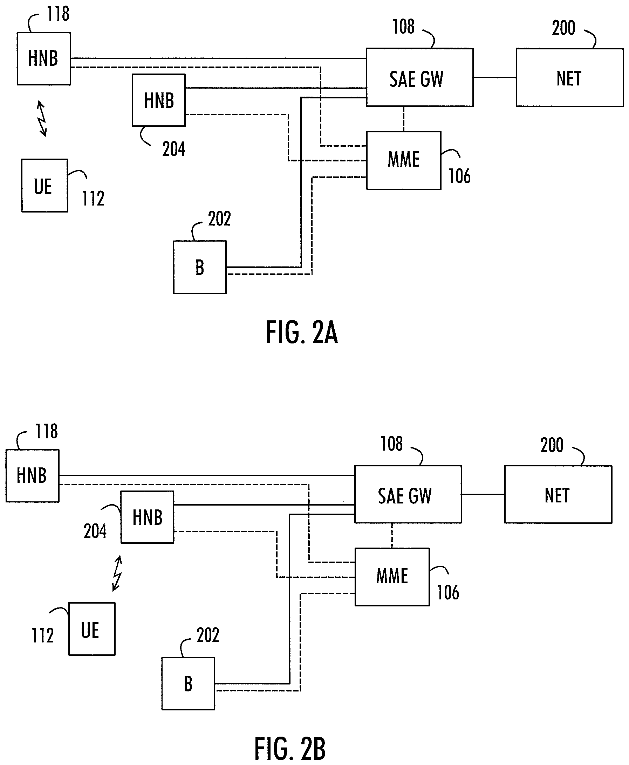

Figure 2A illustrates an embodiment with a simplified example of a network. The network comprises a SAE Gateway 108 and an MME 106. The SAE Gateway provides a connection to Internet 200. Figure 2A shows an eNodeB 202 serving a macro cell. In addition, two local area base stations or Home NodeB's HNB 118 and HNB 204 are shown. The Home NodeB's 118, 204 and the eNodeB 202 are connected to the SAE Gateway 108 and the MME 106.

UE 112 is camped on the HNB 118. The UE 112 belongs to the closed subscriber group of the HNB 118. The user of UE 112 may activate and deactivate the HNB on demand.

In an embodiment, the mobile context of UE, regardless of roaming location, comprises information on the Home NodeB's of which closed subscriber groups the UE belongs to. This means that possible services and applications of Home NB may be considered as extended UE capabilities of the UE.

For example, the mobile context of UE may comprise the identity of the Home NodeB, Internet Protocol (IP) address of the Home NodeB, connection status of the Home NodeB, and information storage capability of the Home NodeB.

The information on a Home NodeB may be a part of the mobile context of an UE even when the Home NodeB is offline. When the Home NodeB is reactivated (switched on), it registers itself to the network. Information regarding the IP address and status of the Home NodeB may be updated into the Home NodeB information of the mobile context of the UE. The Home NodeB information of the mobile context may be updated at any time, for example when the Home NodeB is deactivated (switched off) .

The UE may be roaming, camping on a home network or on other networks. The UE belonging to a closed subscriber group of a Home NodeB may be considered to have a HNB capability as a part of its UE capability. The UE may indicate such capability in the mobile context of the UE. Thus, the networks where the UE registers connects to become aware of the capability. In an embodiment, if a UE belongs to a closed subscriber group of a Home NodeB , the Home NodeB may be utilized as a replica server of the shared data stored in the UE. The shared data may be sharable profiles, multimedia files, or anything the users wish to share with others. The Home NodeB facilitating such UE replica server may be configured to share the data on demand between the user of the UE and other users belonging to the same social service as the user of the UE, for example. The other users wishing to access data shared by the user may be redirected to access the data from the Home NodeB of the user instead of the UE of the user. Thus, the Home NodeB may be utilized for efficient content delivery for mobile users. The shared data may be accessed from the Home NodeB of the user even when the user is roaming outside the coverage area of the Home NodeB. As the resources are delivered by the Home NodeB and not by the UE roaming in a macro cell the usage of the resources of the macro cell is avoided.

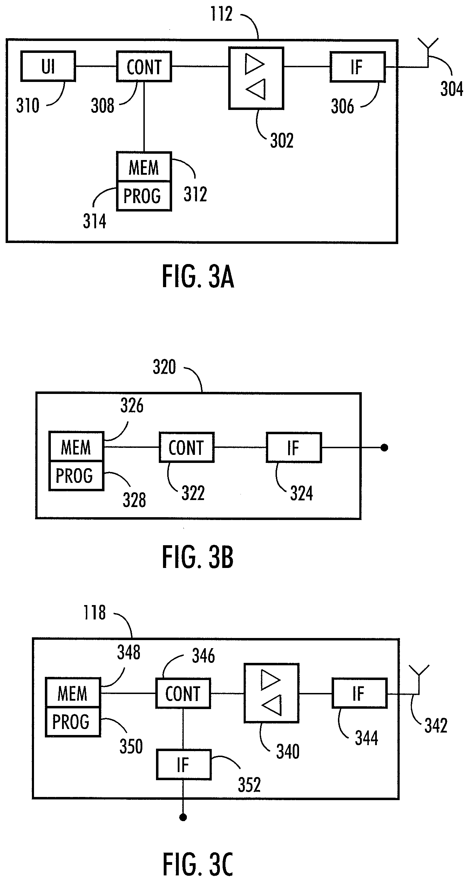

In an embodiment, the Home NodeB may be configured to act as a temporary storage server for messages or data transmitted to the user of a UE. For example, there may be a large-size non-urgent incoming multimedia message addressed to the UE. The network, being aware on the basis of the aforementioned mobile context of the UE that the UE belongs to a closed subscriber group of a particular Home NodeB, may redirect the incoming message to the Home NodeB instead of the UE. The user of the UE may download the message from the Home NodeB to the UE next time the UE attaches to the Home NodeB. UE may send a message to the network the UE is connected to, the message instructing the network to redirect a message or data call addressed to the UE to the Home NodeB for temporary storage if the size or the priority of the message or data call fulfils predetermined criteria. The service may be subscribed from the network also in connection with an updated registration, service-level or capability negotiation with the network, for example. This kind of service-level agreement may also be configured as part of UE subscription profile upon installing HNB and its services. In an embodiment, incoming data calls or messages larger than a given size limit (in bytes) and regarded as non-urgent messages by the network in accordance with configured service-level agreement of the UE may be redirected to a temporary storage server. Figure 2B illustrates an embodiment. The UE 112 is visiting another location served by the Home NodeB 204 facilitating aforementioned UE replica server functions and services. The UE has been authorized to connect to the Home NodeB 204. In an embodiment, the network updates the mobile context data of the UE 112 to the visited Home NodeB 204. The context data may comprise information on the Home NodeB 118 of the UE 112, such as the identity and IP address, capability and connection status. The Home NodeB's 112 and 204 may be configured to communicate with each other as peer-to-peer or point-to-point over an IP-based connection via the service core of the network the UE belongs to. The visited Home NodeB 204 may be configured to act as a temporary replica server for the UE by updating, fetching and storing the shared data of the UE to/from the UE itself over the air interface and its Home NodeB 118 over the established peer-to-peer IP-based connection and providing access to the data for other users. Figures 3A to 3C illustrate examples of apparatuses where embodiments of the invention may be applied. Figure 3A illustrates an example of user equipment. The user equipment 112 comprises a transceiver 302 configured to communicate with one or more network elements such as a Home NodeB or an eNodeB. The transceiver 302 may be connected to an antenna arrangement 304 via an interface 306. The user equipment comprises a controller or processing unit 308 for controlling the functions of the user equipment. The controller 308 is typically implemented with a microprocessor, a signal processor or separate components and associated software. The user equipment 112 further comprises a user interface 310. The user interface may be realized with a display, a keyboard, a microphone and a speaker. The user equipment may comprise a memory 312 connected to the controller 308. The memory may store various software 314 and data required in the operation of the apparatus. The memory may be integrated into the controller. The memory may be configured to store multimedia messages or shared data, such as video clips, music tracks, documents, etc.

Figure 3B illustrates an example of a network element 320. The network element comprises a controller or processing unit 322 for controlling the functions of the network element. The controller 322 is typically implemented with a microprocessor, a signal processor or separate components and associated software.The network element may be connected to other network elements and/or to the Internet via an interface 324 connected to the controller 322. In an embodiment, the interface is configured to utilize IP-based communication with other network elements, such as a SAE Gateway, an eNodeB, a Home NodeB, or an MME. The network element 320 may comprise a memory 326 connected to the controller 322. The memory may store various software 328 and data required in the operation of the apparatus. The memory may be integrated into the controller. In an embodiment, the memory is configured to store a mobile context of user equipment. The mobile context may comprise information on the Home NodeB's of which closed subscriber groups the user equipment belongs to.

Figure 3C illustrates an example of an apparatus. In an embodiment, the apparatus is a Home NodeB 118. The apparatus 118 comprises a transceiver 340 configured to communicate wirelessly with one or more sets of user equipment. The transceiver 340 may be connected to an antenna arrangement 342 via an interface 344. The antenna arrangement may comprise one or more antennas. The apparatus comprises a controller or processing unit 346 for controlling the functions of the network element. The controller 346 is typically implemented with a microprocessor, a signal processor or separate components and associated software.

The apparatus 118 may comprise a memory 348 connected to the controller 346. The memory may store various software 350 and data required in the operation of the apparatus. The memory may be integrated into the controller. The apparatus may be connected to other network elements and to the Internet via an interface 352 connected to the controller 346. In an embodiment, the memory is configured to store a mobile context of user equipment.

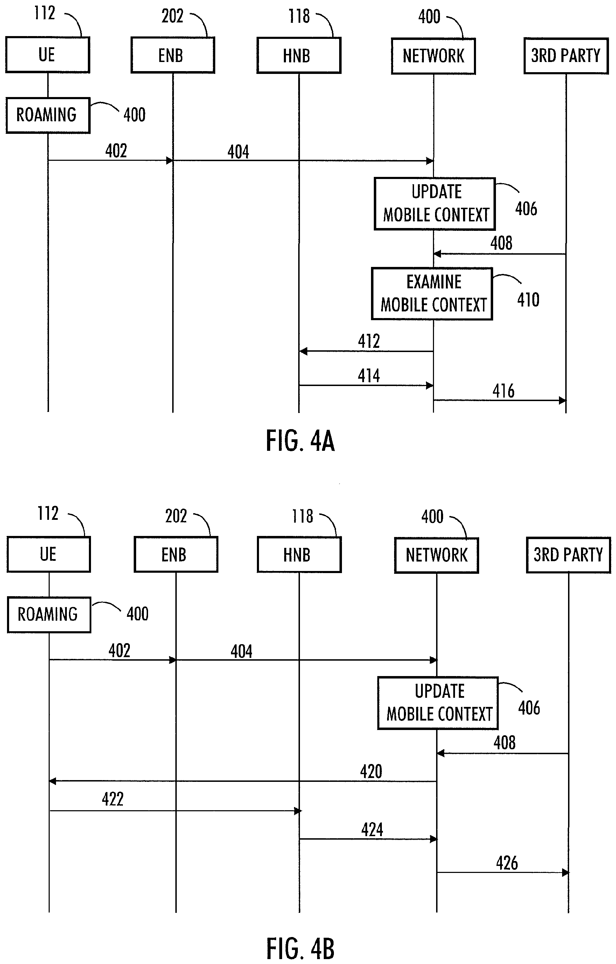

In an embodiment, the memory 348 is configured to store information on user equipment allowed to be in wireless connection with the apparatus and on user equipment currently connected to the apparatus. In an embodiment, the controller 346 is configured to connect to the Internet, and provide user equipment a connection to the Internet and a cellular network, control the transceiver 340 to receive from user equipment shared data and store the data into the memory 348. Figure 4A is a signaling chart illustrating an embodiment of the invention. Figure 4A illustrates signaling between a Home NodeB 118, an eNodeB 202, the network 400 the UE 112 belongs to and a 3^{rd} party wishing to access shared data of the user of the UE 112. The UE 112 belongs to the closed subscriber group of the Home NodeB 118. In this example, the UE 112 is roaming 400 outside the area of the Home NodeB 118 and is camping on eNodeB 202. When registering to the eNodeB and the network 400 the UE 112 sends 402 the eNodeB information on the HNB related capability and context of the UE. The eNodeB sends 404 the information further to the network 400. In addition, (or instead) the visited network 400 may contact the home network of the UE 112 and fetch the detailed UE context including HNB info of the UE from the home network. Next, the visited network creates and updates 406 the mobile context of the UE including the HNB related data beforehand based on the UE indication and/or context details updated from the home network.

In this embodiment, the network 400 receives a request 408 from the 3^{rd} party to access the UE 112 for shared data. The 3^{rd} party may be connected to the network using a UE or a computer or via another network. A server in the network 400 or a network element of the network 400 examines 410 the mobile context of the UE 112 and determines that the mobile context of the UE comprises information on Home NodeB 118 configured to act as a replica server for the shared data of the UE. The server or the network element may be the MME of the network, a call control server (a part of the service management of the network) or some other network server. If the mobile context indicates that the Home NodeB 118 is activated (online), the network forwards 412 the access request to the Home NodeB 118. The Home NodeB 118 receives the request and responds by sending 414 the requested data to the network 400. The network 400 forwards 416 the requested data to the 3^{rd} party. In an embodiment, either the network or the Home NodeB 118 authorizes the 3^{rd} party before responding to the request by sending the requested data.

Figure 4B is a signaling chart illustrating an embodiment of the invention. Figure 4B illustrates signaling between a UE 112, an eNodeB 202,a Home NodeB 118, the network 400 the UE belongs to and a 3^{rd} party wishing to access shared data of the user of the UE 112. The UE 112 belongs to the closed subscriber group of the Home NodeB 118. As in the previous example, the UE 112 is roaming 400 outside the area of the Home NodeB 118 and is camping on eNodeB 202. When registering to the eNodeB and the network 400 the UE 112 sends 402 the eNodeB information on the HNB related capability and context of the UE. The eNodeB sends 404 the information further to the network 400. In addition, (or instead) the visited network 400 may contact the home network of the UE 112 and fetch the detailed UE context including HNB info of the UE from the home network. Next, the visited network creates and updates 406 the mobile context of the UE including the HNB related data beforehand based on the UE indication and/or context details updated from the home network.

In this example, the network 400 receives a request 408 to access the user equipment 112 for shared data. The network 400 forwards 420 the request to the UE 112. The user of the UE 112 may make the decision whether the data is to be sent to the 3^{rd} party. In an embodiment, the UE may decide based on predetermined rules stored in the UE. If allowed, the UE 112 sends information 422 about the request or has the network redirect the request to the Home NodeB 118. The Home NodeB 118 responds by sending 424 the requested data to the network 400. The network 400 forwards 426 the requested data to the 3^{rd} party. This embodiment allows for a quick response to a call request in control plane yet not utilizing macro cell radio resources for distributing actual requested data, especially when the UE is roaming outside the home network and camping on a visited macro system.

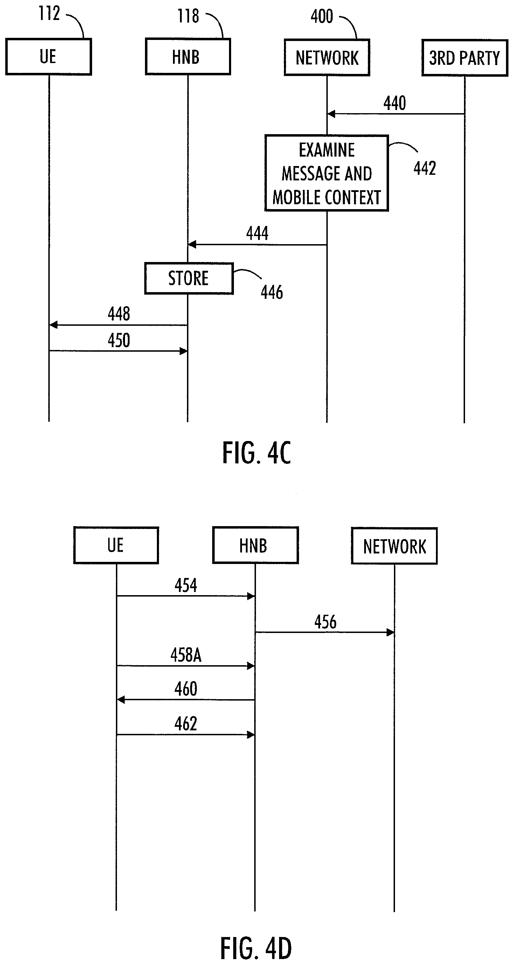

Figure 4C is a signaling chart illustrating an embodiment of the invention. Figure 4C illustrates signaling between a UE 112, a Home NodeB 118, the network 400 the UE 112 belongs to and a 3^{rd} party when the Home NodeB 118 is configured to act as a temporary storage server for incoming messages or data calls transmitted to the UE 112. In this embodiment, the network 400 receives a message or data call 440 addressed to the user equipment. A server in the network 400 or a network element of the network determines 442 the size and/or priority of the message or data call, examines the mobile context of the UE 112 and determines that the mobile context of the UE comprises the Home NodeB 118 configured to act as temporary storage server. On the basis of the size or the priority of the message or data call and Home NodeB properties stored in the mobile context a server in the network 400 or a network element of the network redirects 444 the message or data call to a Home NodeB 118 included in the mobile context of the UE 112. The server or the network element may be the MME of the network, a call control server (a part of the service management of the network) or some other network server. The Home NodeB 118 stores 446 the received content until the UE 112 either connects 448 to the Home NodeB or requests 448 the message. The Home NodeB 118 transmits 450 the message to the UE 112.

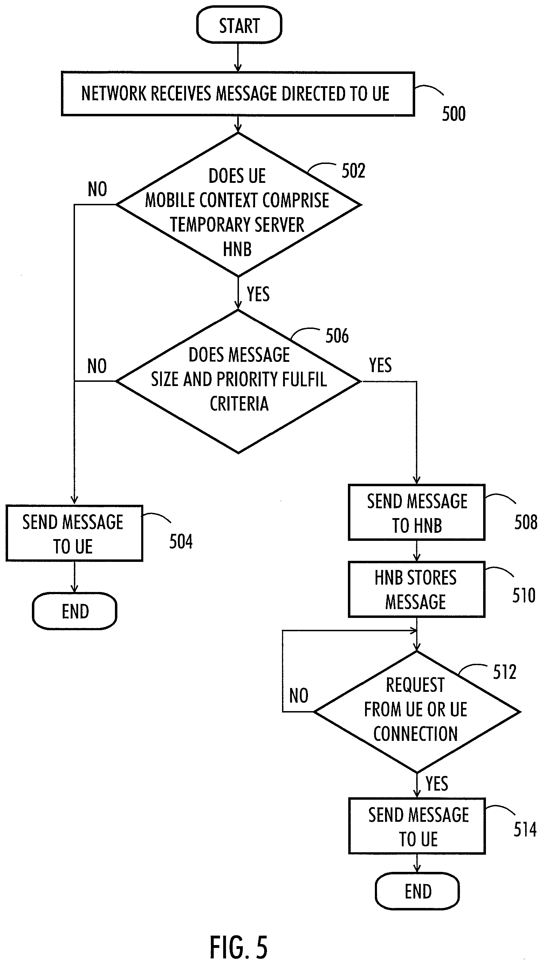

Figure 5 is a flowchart illustrating the same embodiment as Figure 4C. In step 500, the network 400 receives a message or data call addressed to user equipment 112.

In step 502, the network examines the mobile context of the UE 112 and determines whether the mobile context of the UE comprises a Home NodeB 118 configured to act as temporary storage. If not, the message is sent directly to the UE in step 504.

If a HNB acting as a temporary storage exists, the network determines in step 506 the size and/or priority of the message or data call. If the size is larger than a predetermined limit and the priority of the message is below a given limit, the message is redirected in step 508 to the Home NodeB acting as a temporary storage. If not, the message is sent directly to the UE in step 504.

In step 510, the Home NodeB 118 stores 446 the received content.

In step 512, the Home NodeB checks if the UE has requested the content or if the UE has formed a connection to the Home NodeB.

In step 514, a connection or a request has been detected and the Home NodeB 118 transmits the message to the UE 112.

Figure 4D is a signaling chart illustrating an embodiment of the invention. Figure 4D illustrates signaling between a UE 112, a Home NodeB 118 and the network 400 the UE 112 belongs to. The UE 112 connects 454 wirelessly to the Home NodeB 118. The Home NodeB 118 informs 456 the network 400 about the connection. The UE 112 sends the Home NodeB 118 a message 458A requesting updating the shared data stored in the Home NodeB 118 or initiating the storing of shared data in the Home NodeB 118. In an embodiment, the message is a RCC_CONNECTION_REQUEST message having a predetermined value in the Establishment_Cause information element of the message. The Home NodeB 118 and the UE 112 may then synchronize the shared data in the UE and in the Home NodeB by exchanging one or more messages 460, 462. The updating may occur without network involvement.

In an embodiment, the UE 112 and the Home NodeB are configured to communicate with each other during synchronization or updating of the shared data utilising the same protocol used between the user equipment and the network when transmitting multimedia messaging. In an embodiment, the protocol is Session Initiation Protocol (SIP).

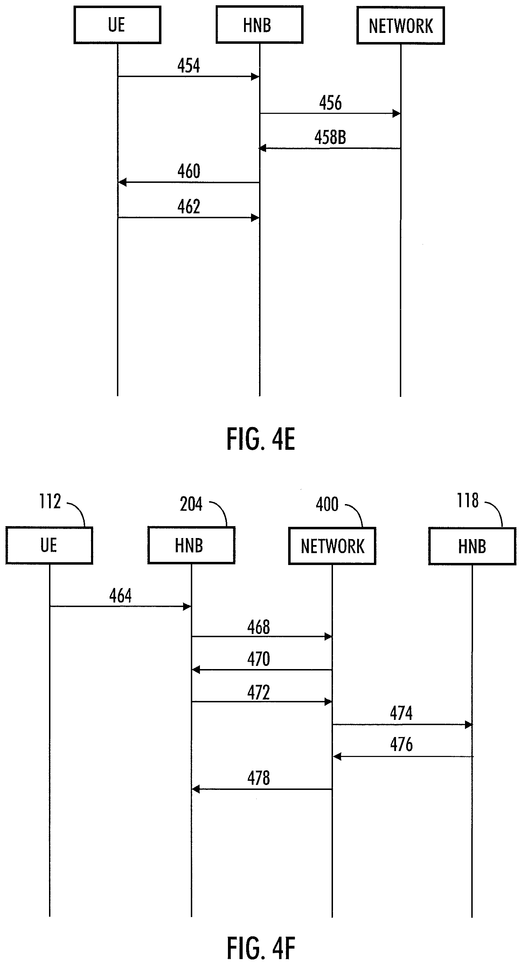

Figure 4E is a signaling chart illustrating an embodiment of the invention. Figure 4E illustrates signaling between a UE 112, a Home NodeB 118 and the network 400 the UE 112 belongs to. The UE 112 connects 454 wirelessly to the Home NodeB 118. The Home NodeB 118 informs 456 the network 400 about the connection. In this embodiment, the network 400 sends the Home NodeB 118 a message 458B requesting updating the shared data stored in the Home NodeB 118 or initiating the storing of shared data in the Home NodeB 118. In an embodiment, the message is a RRC_PAGING message having a predetermined value in the Paging_Cause information element of the message. The Home NodeB 118 and the UE 112 may then synchronize the shared data in the UE and in the Home NodeB by exchanging one or more messages 460, 462.

Figure 4F is a signaling chart illustrating an embodiment of the invention. Figure 4F illustrates signaling between the UE 112, the Home NodeB 118, the network 400 the UE belongs to and a Home NodeB 204. The UE 112 belongs to the closed subscriber group of the Home NodeB 118 but is visiting the area served the Home NodeB 204.

In this embodiment, the UE 112 connects 464 to the visited Home NodeB 204, indicating about its HNB capability as it has its own Home NodeB 118. It is assumed that the UE is authorized to connect to the visited Home NodeB 204. The owner of the visited Home NodeB may have configured the Home NodeB 204 to allow the connection. The Home NodeB 204 informs 468 the network 400 about the connection and the HNB capability of the visiting UE 112. The network determines and updates the mobile context of the UE 112 and transmits 470 the context to the Home NodeB 204. The network may also establish e.g. an IP based peer-to-peer connection or a tunnel between the visited Home NodeB 204 and the Home NodeB 118. For this the network may have to exchange messages with both the visited Home NodeB 204 and the Home NodeB 118.

The Home NodeB 204 checks the mobile context and determines the Home NodeB 118 which is acting a replica server of the UE 112. The Home NodeB's are able to communicate between each other via Internet and the network 400. The Home NodeBs 204 and 118 are configured to exchange data via the network by exchanging one or more messages 472, 474, 476, 478 via the network 400 or via the established peer-to-peer connection. Thus, the visited Home NodeB 204 may act as a temporary replica server for the visiting UE 112.

The signalling messages and related functions described in the attached figures are in no absolute chronological order, and some of the messages may be performed simultaneously or in an order differing from the given one. Other functions can also be executed between the messages or within the messages and other signalling messages sent between the illustrated messages. Some of the messages can also be left out or replaced with a corresponding message. The signalling messages are only exemplary and may even comprise several separate messages for transmitting the same information. In addition, the messages may also contain other information. For example, acknowledgement messages may be sent between the described messages.

The apparatuses or controllers able to perform the above-described steps may be implemented as an electronic digital computer, which may comprise a working memory (RAM), a central processing unit (CPU), and a system clock. The CPU may comprise a set of registers, an arithmetic logic unit, and a controller. The controller is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, an electrical carrier signal, a telecommunications signal, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

An embodiment provides an apparatus, the apparatus comprising means for storing a mobile context of user equipment, the mobile context comprising information on the Home NodeB's of which closed subscriber groups the user equipment belongs to. An embodiment provides an apparatus, the apparatus comprising means for storing information on user equipment with which a wireless connection is allowed and on user equipment currently connected means for providing the user equipment a possibility to connect to the Internet and a cellular network, and means for receiving from the user equipment shared data and replicate the shared data by storing the data into a memory. An embodiment provides an apparatus, the apparatus comprising means for belonging to a closed subscriber group of at least one network element; and means for storing a mobile context of the apparatus, the mobile context comprising information on close subscriber groups the apparatus belongs to and associated network elements.

It will be obvious to a person skilled in the art that, as technology advances, the inventive concept can be implemented in various ways. The invention and its embodiments are not limited to the examples described above but may vary within the scope of the claims.

## Claims

1. An apparatus configured to:
store a mobile context of user equipment (110, 112, 128), the mobile context comprising information, on Home NodeBs (118, 204), identifying which closed subscriber groups the user equipment belongs to, and
wherein the apparatus is further configured to store a mobile context of user equipment (110, 112, 128), the mobile context comprising information of a Home NodeB configured to act as a replica server of the user equipment by storing shared data stored in the user equipment.

2. The apparatus of any preceding claim, the apparatus being further configured to store information, on the Home NodeBs, associated with closed subscriber groups the user equipment (110, 112, 128) belongs to, the information comprising at least one of following:
identity of the Home NodeB, Internet Protocol (IP) address of the Home NodeB, connection status of the Home NodeB, information storage capability of the Home NodeB.

3. The apparatus of any preceding claim, the apparatus being further configured to store a mobile context of user equipment, the mobile context comprising, regardless of the roaming location of the user equipment (110, 112, 128), information, on the Home NodeBs, identifying which closed subscriber groups the user equipment belongs to.

4. The apparatus of any preceding claim, wherein the apparatus is configured to:
receive (440) a message or data call addressed to the user equipment (110, 112, 128);
determine (442) the size and/or priority of the message or data call;
redirect (444) the message or data call to a Home NodeB included in the mobile context of the user equipment on the basis of the size or the priority of the message or data call and Home NodeB properties stored in the mobile context.

5. An apparatus configured to:
have the capability of being in wireless connection with network elements (118, 204, 320);
belong to a closed subscriber group of at least one network element (118, 204, 320);
store a mobile context of the apparatus, the mobile context comprising information, on network elements, identifying which closed subscriber groups the user equipment belongs to, and
wherein the apparatus is configured to store a mobile context of the apparatus, the mobile context comprising information on network elements configured to act as a replica server of the apparatus by storing shared data stored in the apparatus.

6. The apparatus of any preceding claim 5, the apparatus being configured to store information, on the network elements (118, 204, 320), associated with closed subscriber groups the apparatus belongs to, the information comprising at least one of following:
identity of the network element, Internet Protocol (IP) address of the network elements, connection status of the network elements, information storage capability of the network elements.

7. The apparatus of any preceding claim 5 or 6, the apparatus being further configured to initiate updating (406) of the shared data with the network element.

8. The apparatus of claim 7, the apparatus being further configured to send a command to the network element to initiate the updating of shared data.

9. The apparatus of claim 7, the apparatus being further configured to initiate the updating on the basis of a command received from a network the apparatus belongs to.

10. A method comprising:
storing a mobile context of user equipment (110, 112, 128), the mobile context comprising information, on Home NodeBs, identifying which closed subscriber groups the user equipment belongs to, and wherein the method further comprises:
storing a mobile context of user equipment, the mobile context comprising information of a Home NodeB configured to act as a replica server of the user equipment by storing shared data stored in the user equipment.

11. The method of any preceding claim 10, further comprising: storing information, on Home NodeBs, associated with closed subscriber groups the user equipment belongs to, the information comprising at least one of following:
identity of the Home NodeB, Internet Protocol (IP) address of the Home NodeB, connection status of the Home NodeB, information storage capability of the Home NodeB.

12. The method of any preceding claim 10 to 12, further comprising:
receiving (440) a message or data call addressed to the user equipment (110, 112, 128);
determining (442) the size and/or priority of the message or data call;
redirecting (444) the message or data call to a Home NodeB included in the mobile context of the user equipment on the basis of the size or the priority of the message or data call and Home NodeB properties stored in the mobile context.

13. A method, comprising:
belonging to a closed subscriber group of at least one network element;
storing a mobile context of the apparatus, the mobile context comprising information, on Home NodeB s, identifying which closed subscriber groups the user equipment belongs to; and wherein the method further comprises:
storing a mobile context of the apparatus, the mobile context comprising information on network elements configured to act as a replica server of the apparatus by storing shared data stored in the apparatus.

14. The method of any preceding claim 14, further comprising:
storing information on the network elements (118, 204, 320) associated with closed subscriber groups the apparatus belongs to, the information comprising at least one of following:
identity of the network element,
Internet Protocol (IP) address of the network elements,
connection status of the network elements,
information storage capability of the network elements.

15. A chipset comprising the apparatus of any one of claims 1 to 9.

16. A computer program comprising program code means adapted to perform any of steps of claims 10 to 15 when the program is run on a computer.

## Patentansprüche

1. Vorrichtung, die dazu ausgestaltet ist,
einen mobilen Kontext eines Benutzergeräts (110, 112, 128) zu speichern, wobei der mobile Kontext Informationen über Home-NodeBs (118, 204) umfasst, die kennzeichnen, zu welchen geschlossenen Teilnehmergruppen das Benutzergerät gehört, und
wobei die Vorrichtung ferner dazu ausgestaltet ist, einen mobilen Kontext eines Benutzergeräts (110, 112, 128) zu speichern, wobei der mobile Kontext Informationen über einen Home-NodeB umfasst, der dazu ausgestaltet ist, als ein Replica-Server des Benutzergeräts zu fungieren, indem gemeinsam genutzte Daten gespeichert werden, die in dem Benutzergerät gespeichert sind.

2. Vorrichtung nach einem vorhergehenden Anspruch,
wobei die Vorrichtung ferner dazu ausgestaltet ist, auf den Home-NodeBs Informationen zu speichern, die mit geschlossenen Teilnehmergruppen in Zusammenhang stehen, zu denen das Benutzergerät (110, 112, 128) gehört, wobei die Informationen zumindest eine der folgenden Informationen umfassen: Identität des Home-NodeBs, Internet-Protokoll-Adresse (IP-Adresse) des Home-NodeBs, Verbindungsstatus des Home-NodeBs, Informationsspeichervermögen des Home-NodeBs.

3. Vorrichtung nach einem der vorhergehenden Ansprüche,
wobei die Vorrichtung ferner dazu ausgestaltet ist, einen mobilen Kontext des Benutzergeräts zu speichern, wobei der mobile Kontext, unabhängig vom Roaming-Standort der Benutzergeräts (110, 112, 128), Informationen über die Home-NodeBs umfasst, die kennzeichnen, zu welchen geschlossenen Teilnehmergruppen das Benutzergerät gehört.

4. Vorrichtung einem der vorhergehenden Ansprüche,
wobei die Vorrichtung für Folgendes ausgestaltet ist:
- Empfangen (440) einer Nachricht oder eines Datenanrufs, die bzw. der an das Benutzergerät (110, 112, 128) adressiert ist;
- Bestimmen (442) der Größe und/oder Priorität der Nachricht oder des Datenanrufs;
- Weiterleiten (444) der Nachricht oder des Datenanrufs an einen Home-NodeB, der im mobilen Kontext des Benutzergeräts enthalten ist, auf der Grundlage der Größe oder der Priorität der Nachricht oder des Datenanrufs und der im mobilen Kontext gespeicherten Eigenschaften des Home-NodeBs.

5. Vorrichtung, die dazu ausgestaltet ist:
- die Fähigkeit aufzuweisen, in drahtloser Verbindung mit Netzwerkelementen (118, 204, 320) zu stehen;
- zu einer geschlossenen Teilnehmergruppe von mindestens einem Netzwerkelement (118, 204, 320) zu gehören;
- einen mobilen Kontext der Vorrichtung zu speichern, wobei der mobile Kontext Informationen über Netzwerkelemente umfasst, die kennzeichnen, zu welchen geschlossenen Teilnehmergruppen das Benutzergerät gehört, und
wobei die Vorrichtung dazu ausgestaltet, einen mobilen Kontext der Vorrichtung zu speichern, wobei der mobile Kontext Informationen über Netzwerkelemente umfasst, die dazu ausgestaltet sind, als ein Replica-Server der Vorrichtung zu fungieren, indem gemeinsam genutzte Daten gespeichert werden, die in der Vorrichtung gespeichert sind.

6. Vorrichtung nach Anspruch 5,
wobei die Vorrichtung dazu ausgestaltet ist, in den Netzwerkelementen (118, 204, 320) Informationen zu speichern, die geschlossenen Teilnehmergruppen zugeordnet sind, zu denen die Vorrichtung gehört, wobei die Informationen mindestens eine der folgenden Informationen umfassen:
Identität des Netzwerkelements, Internet-Protokoll-Adresse (IP-Adresse) der Netzwerkelemente, Verbindungsstatus der Netzwerkelemente, Informationsspeichervermögen der Netzwerkelemente.

7. Vorrichtung nach Anspruch 5 oder 6,
wobei die Vorrichtung ferner dazu ausgestaltet ist, ein Aktualisieren (406) der mit dem Netzwerkelement gemeinsam genutzten Daten zu initiieren.

8. Vorrichtung nach Anspruch 7,
wobei die Vorrichtung ferner dazu ausgestaltet ist, einen Befehl an das Netzwerkelement zu senden, um das Aktualisieren der gemeinsam genutzten Daten zu initiieren.

9. Vorrichtung nach Anspruch 7,
wobei die Vorrichtung ferner dazu ausgestaltet ist, das Aktualisieren auf der Grundlage eines Befehls zu initiieren, der von einem Netzwerk empfangen wird, zu dem die Vorrichtung gehört.

10. Verfahren, das Folgendes umfasst:
- Speichern eines mobilen Kontexts des Benutzergeräts (110, 112, 128), wobei der mobile Kontext Informationen über Home-NodeBs umfasst, die kennzeichnen, zu welchen geschlossenen Teilnehmergruppen das Benutzergerät gehört, und
wobei das Verfahren ferner Folgendes umfasst:
- Speichern eines mobilen Kontexts des Benutzergeräts, wobei der mobile Kontext Informationen über einen Home-NodeBs umfasst, der dazu ausgestaltet ist, als ein Replica-Server des Benutzergeräts zu fungieren, indem gemeinsam genutzte Daten gespeichert werden, die in dem Benutzergerät gespeichert sind.

11. Verfahren nach Anspruch 10,
wobei das Verfahren ferner Folgendes umfasst:
- Speichern von Informationen über Home-NodeBs, die mit geschlossenen Teilnehmergruppen im Zusammenhang stehen, zu denen das Benutzergerät gehört, wobei die Informationen mindestens eine der folgenden Informationen umfassen: Identität des Home-NodeBs, Internet-Protokoll-Adresse (IP-Adresse) des Home-NodeBs, Verbindungsstatus des Home-NodeBs, Informationsspeichervermögen des Home-NodeBs.

12. Verfahren nach Anspruch 10 oder 11,
das ferner Folgendes umfasst:
- Empfangen (440) einer Nachricht oder eines Datenanrufs, die bzw. der an das Benutzergerät (110, 112, 128) adressiert ist;
- Bestimmen (442) der Größe und/oder Priorität der Nachricht oder des Datenanrufs;
- Weiterleiten (444) der Nachricht oder des Datenanrufs an einen Home-NodeB, der im mobilen Kontext des Benutzergeräts enthalten ist, auf der Grundlage der Größe oder der Priorität der Nachricht oder des Datenanrufs und der im mobilen Kontext gespeicherten Eigenschaften des Home-NodeBs.

13. Verfahren, das Folgendes umfasst:
- Zugehörigkeit zu einer geschlossenen Teilnehmergruppe von mindestens einem Netzwerkelement;
- Speichern eines mobilen Kontexts der Vorrichtung, wobei der mobile Kontext Informationen über Home-NodeBs umfasst, die kennzeichnen, zu welchen geschlossenen Teilnehmergruppen das Benutzergerät gehört; und
wobei das Verfahren ferner Folgendes umfasst:
- Speichern eines mobilen Kontexts der Vorrichtung, wobei der mobile Kontext Informationen über Netzwerkelemente umfasst, die dazu ausgestaltet sind, als ein Replica-Server der Vorrichtung zu fungieren, indem gemeinsam genutzte Daten gespeichert werden, die in der Vorrichtung gespeichert sind.

14. Verfahren nach Anspruch 13,
das ferner folgendes umfasst:
- Speichern von Informationen über die Netzwerkelemente (118, 204, 320), die geschlossenen Teilnehmergruppen zugeordnet sind, zu denen die Vorrichtung gehört, wobei die Informationen mindestens eine der folgenden Informationen umfassen: Identität des Netzwerkelements, Internet Protocol (IP)-Adresse der Netzwerkelemente, Verbindungsstatus der Netzwerkelemente, Informationsspeichervermögen der Netzwerkelemente.

15. Chipsatz, der eine Vorrichtung nach einem der Ansprüche 1 bis 9 aufweist.

16. Computerprogramm mit Programmcodeeinrichtungen, die geeignet sind, jeden der Schritte der Ansprüche 10 bis 14 auszuführen, wenn das Programm auf einem Computer ausgeführt wird.

## Revendications

1. Équipement configuré pour :
stocker un contexte mobile d'équipement utilisateur (110, 112, 128), le contexte mobile comprenant des informations sur des Nœuds B Domestiques (118,204) identifiant les groupes d'abonnés fermés auxquels l'équipement utilisateur appartient, et
selon lequel l'équipement est en outre configuré pour stocker un contexte mobile d'équipement utilisateur (110, 112, 128), le contexte mobile comprenant des informations sur des Nœuds B Domestiques configurés pour fonctionner en tant que serveur répliqué de l'équipement utilisateur en stockant des données partagées dans l'équipement utilisateur.

2. Équipement selon l'une quelconque des revendications précédentes, l'équipement étant en outre configuré pour stocker des informations sur des Nœuds B Domestiques associées aux groupes d'abonnés fermés auxquels l'équipement utilisateur appartient (110, 112, 128), les informations comprenant au moins l'un des éléments suivants :
l'identité du Nœud B Domestique ;
l'adresse de protocole Internet (IP) du Nœud B Domestique ;
l'état de connexion du Nœud B Domestique ;
la capacité à stocker des informations du Nœud B Domestique.

3. Équipement selon l'une quelconque des revendications précédentes, l'équipement étant en outre configuré pour stocker un contexte mobile d'équipement utilisateur, le contexte mobile comprenant, indépendamment du lieu d'itinérance de l'équipement utilisateur (110, 112, 128), des informations sur des Nœuds B Domestiques identifiant les groupes d'abonnés fermés auxquels l'équipement utilisateur appartient.

4. Équipement selon l'une quelconque des revendications précédentes, l'équipement étant en outre configuré pour :
recevoir (440) un message ou un appel de données adressé à l'équipement utilisateur (110, 112, 128) ;
calculer (442) la taille et/ou la priorité du message ou de l'appel de données ;
rediriger (444) le message ou l'appel de données vers un Nœud B Domestique inclus dans le contexte mobile de l'équipement utilisateur sur la base de la taille ou de la priorité du message ou de l'appel de données et des propriétés de Nœud B Domestique stockées dans le contexte mobile.

5. Équipement configuré pour :
disposer de la capacité d'être en communication sans fil avec des éléments réseau (118, 204, 320) ;
appartenir à un groupe d'abonnés fermé du au moins un élément réseau (118, 204, 320) ;
stocker un contexte mobile de l'équipement, le contexte mobile comprenant des informations, sur des éléments réseau, identifiant les groupes d'abonnés fermé auxquels l'équipement utilisateur appartient ; et
selon lequel l'équipement est configuré pour stocker un contexte mobile de l'équipement, le contexte mobile comprenant des informations sur des éléments réseau configurés pour fonctionner en tant que serveur répliqué de l'équipement en stockant des données partagées dans l'équipement.

6. Équipement selon la revendication 5, l'équipement étant configuré pour stocker des informations, sur des éléments réseau (118, 204, 320), associées aux groupes d'abonnés fermés auxquels l'équipement appartient, les informations comprenant au moins l'un des éléments suivants :
l'identité de l'élément réseau ;
l'adresse de protocole Internet (IP) des éléments réseau ;
l'état de connexion des éléments réseau ;
la capacité à stocker des informations des éléments réseau.

7. Équipement selon l'une quelconque des revendications 5 ou 6 précédentes, l'équipement étant en outre configuré pour initier une mise à jour (406) des données partagées avec l'élément réseau.

8. Équipement selon la revendication 7, l'équipement étant en outre configuré pour envoyer une commande à l'élément réseau pour initier la mise à jour des données partagées.

9. Équipement selon la revendication 7, l'équipement étant en outre configuré initier la mise à jour sur la base d'une commande reçue d'un réseau auquel l'équipement appartient.

10. Procédé comprenant :
le stockage d'un contexte mobile d'équipement utilisateur (110, 112, 128), le contexte mobile comprenant des informations sur des Nœuds B Domestiques identifiant les groupes d'abonnés fermés auxquels l'équipement utilisateur appartient, et selon lequel le procédé comprend en outre :
le stockage d'un contexte mobile d'équipement utilisateur (110, 112, 128), le contexte mobile comprenant des informations sur un Nœud B Domestique configuré pour fonctionner en tant que serveur répliqué de l'équipement utilisateur en stockant des données partagées dans l'équipement utilisateur.

11. Procédé selon la revendication 10, comprenant en outre : le stockage d'informations, sur des Nœuds B Domestiques, associées aux groupes d'abonnés fermés auxquels l'équipement utilisateur appartient, les informations comprenant au moins l'un des éléments suivants :
l'identité du Nœud B Domestique ;
l'adresse de protocole Internet (IP) du Nœud B Domestique ;
l'état de connexion du Nœud B Domestique ;
la capacité à stocker des informations du Nœud B Domestique.

12. Procédé selon l'une quelconque des revendications 10 à 12, comprenant en outre :
la réception (440) d'un message ou d'un appel de données adressé à l'équipement utilisateur (110, 112, 128) ;
le calcul (442) de la taille et/ou de la priorité du message ou de l'appel de données ;
la redirection (444) du message ou de l'appel de données vers un Nœud B Domestique inclus dans le contexte mobile de l'équipement utilisateur sur la base de la taille ou de la priorité du message ou de l'appel de données et des propriétés de Nœud B Domestique stockées dans le contexte mobile.

13. Procédé comprenant :
l'appartenance à un groupe d'abonnés fermé d'au moins un élément réseau ;
le stockage d'un contexte mobile d'équipement, le contexte mobile comprenant des informations sur des Nœuds B Domestiques identifiant les groupes d'abonnés fermés auxquels l'équipement utilisateur appartient ;
et selon lequel le procédé comprend en outre :
le stockage d'un contexte mobile de l'équipement, le contexte mobile comprenant des informations sur des éléments réseau configurés pour fonctionner en tant que serveur répliqué de l'équipement en stockant des données partagées dans l'équipement.

14. Procédé selon la revendication 13 précédente, comprenant en outre :
le stockage d'informations sur des éléments réseau (118, 204, 320), associées aux groupes d'abonnés fermés auxquels l'équipement appartient, les informations comprenant au moins l'un des éléments suivants :
l'identité de l'élément réseau ;
l'adresse de protocole Internet (IP) des éléments réseau ;
l'état de connexion des éléments réseau ;
la capacité à stocker des informations des éléments réseau.

15. Puce informatique comprenant :
l'équipement selon l'une quelconque des revendications 1 à 9.

16. Programme d'ordinateur comprenant des moyens de code de programmation adaptés pour effectuer la mise en œuvre de l'une quelconque des étapes des revendications 10 à 15 lorsque le programme est exécuté sur un ordinateur.
